# EUROPEAN PATENT APPLICATION

(11) **EP 3 018 849 A1**
(43) Date of publication of application: **11.05.2016**
(21) Application number: 15190312.7
(22) Date of filing: 16.10.2015
(51) Int. Cl.: H04J 3/06, H04L 7/00, G06F 5/06, G06F 1/12

(54) **LINK LAYER SIGNAL SYNCHRONIZATION**

(30) Priority: 10.11.2014 US 201414537618
(71) Applicant: Intel Corporation, Santa Clara, CA 95054 (US)
(72) Inventor: BIRRITTELLA, Mark S., Chippewa Falls, WI Wisconsin 54729 (US)
(74) Representative: Rummler, Felix

(57) **Abstract**

Embodiments of the present disclosure are directed toward signal synchronization in a link layer interconnect fabric. In one instance, an apparatus with logic for signal synchronization may include a clock synchronization logic to compare a core clock of the apparatus having a core clock frequency against a transmission clock of the apparatus having a first frequency or a reception clock of the apparatus having a second frequency, and, based on results of the comparison, generate a synchronized link transfer transmission clock or a synchronized link transfer reception clock respectively.. Other embodiments may be described and/or claimed.

## Description

### Field

Embodiments of the present disclosure generally relate to the field of compute interconnect architecture, and more particularly, to techniques and configurations for signal synchronization in a link layer interconnect fabric.

### Background

A computer system may comprise computer architecture that specifies its parts and their relations, and defines interconnects between the system components (e.g., nodes). The architecture may include the following components: host fabric interfaces (HFIs), links, switches, gateways, and a management model. The interconnects may be structured in an interconnect hierarchy comprising multiple layers, including, e.g., physical layer (PHY), link layer (sometimes referred to as Layer 2), and others. HFIs may include the logic to implement the physical and link layers of the architecture, such that a node may attach to a fabric and send and receive packets to other servers or computing devices. Links may include point-to-point interconnects that may connect HFIs to switches, switches to other switches, or switches to gateways.

Link layer logic may be configured to synchronize data and control signals passing through the link layer (e.g., through link transfer transmission logic and link transfer reception logic) at different clock frequencies. For example, link layer logic may use the chip core (e.g., host processor) logic frequency, the transmission (Tx) frequency of the link transmission domain (e.g., transmission serializer-deserializer (SerDes) parallel interface) and the reception (Rx) frequency of the link reception domain (e.g., reception SerDes parallel interface). These signal frequencies may be different and require synchronization of signals passing through the link layer logic. For example, the chip core frequency is different (typically higher) than Tx or Rx frequency. The Tx and Rx frequencies may also differ, resulting in a varying phase relationship between these two frequencies. Furthermore, signals (e.g., control signals) may need to be passed back and forth across the domain boundaries (e.g., between reception and transmission domains or between chip core domain and reception or transmission domains). However, latency may be added to the signals at each crossing of the domain boundary.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
FIG. 1 is a high-level block diagram of an example computing system 100 illustrating various components of the interconnect architecture, in accordance with some embodiments.
FIG. 2 is a schematic diagram of a link layer logic module in accordance with some embodiments.
FIG. 3 is a schematic diagram illustrating clock synchronization logic configured to provide signal synchronization for a link layer logic module, in accordance with some embodiments.
FIG. 4 is a schematic diagram illustrating signal synchronization for a transmission side of a link layer logic module, in accordance with some embodiments.
FIG. 5 is a process flow diagram for signal synchronization in a link layer logic module associated with a compute node, in accordance with some embodiments.
FIG. 6 schematically illustrates an example computing device suitable for having various components of FIGS. 1-5, such as a computing system including a compute node and interconnect fabric, in accordance with some embodiments.

### Detailed Description

Embodiments of the present disclosure include techniques and configurations for signal synchronization in a link layer interconnect fabric. In the following description, various aspects of the illustrative implementations will be described using terms commonly employed by those skilled in the art to convey the substance of their work to others skilled in the art. However, it will be apparent to those skilled in the art that embodiments of the present disclosure may be practiced with only some of the described aspects. For purposes of explanation, specific numbers, materials, and configurations are set forth in order to provide a thorough understanding of the illustrative implementations. However, it will be apparent to one skilled in the art that embodiments of the present disclosure may be practiced without the specific details. In other instances, well-known features are omitted or simplified in order not to obscure the illustrative implementations.

In the following detailed description, reference is made to the accompanying drawings that form a part hereof, wherein like numerals designate like parts throughout, and in which is shown by way of illustration embodiments in which the subject matter of the present disclosure may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C).

The description may use perspective-based descriptions such as top/bottom, in/out, over/under, and the like. Such descriptions are merely used to facilitate the discussion and are not intended to restrict the application of embodiments described herein to any particular orientation.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

The term "coupled with," along with its derivatives, may be used herein. "Coupled" may mean one or more of the following. "Coupled" may mean that two or more elements are in direct physical or electrical contact. However, "coupled" may also mean that two or more elements indirectly contact each other, but yet still cooperate or interact with each other, and may mean that one or more other elements are coupled or connected between the elements that are said to be coupled with each other. The term "directly coupled" may mean that two or more elements are in direct contact.

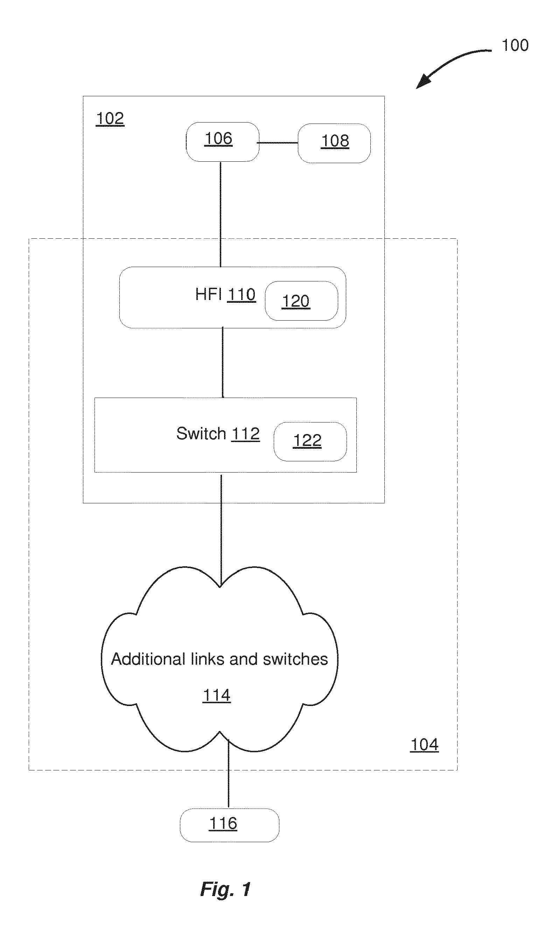

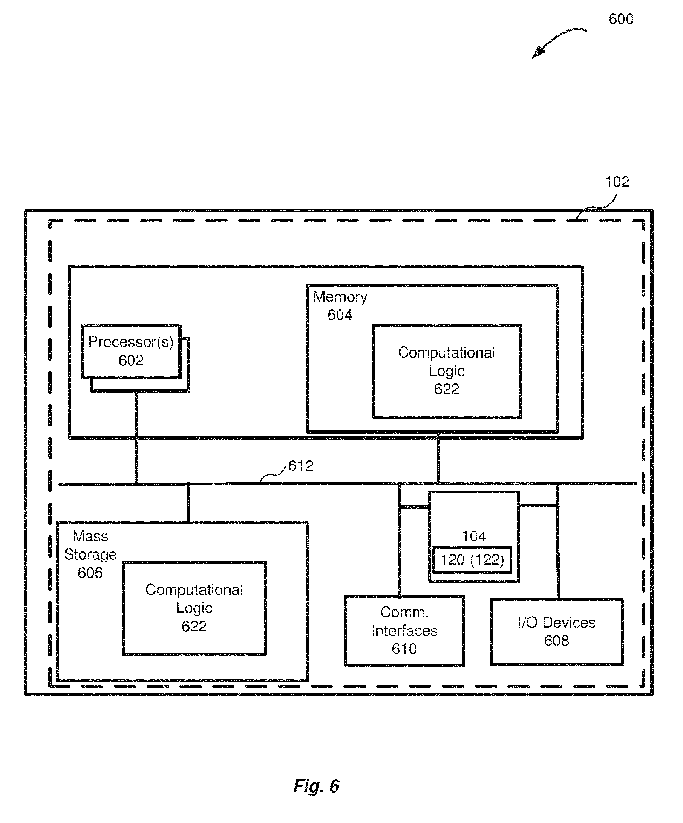

FIG. 1 is a high-level block diagram of an example computing system 100 illustrating various components of the interconnect architecture, in accordance with some embodiments. As shown, the system 100 may include a compute node 102 that may be connected with other systems, subsystems, nodes, networks, and the like via an interconnect fabric 104. The node 102 may include any type of node, such as a host that may have a number of various functions depending on the type of software it may run. The node 102 may include a core (e.g., processor such as central processing unit (CPU)) 106 that may be implemented as an integrated circuit having single-core or multi-cores, e.g., a multi-core microprocessor. For the purpose of this application, including the claims, the terms "processor" and "core" may be considered synonymous, unless the context clearly requires otherwise. The node 102 may include other appropriate components 108 necessary for implementing the node's functionality (e.g., memory, peripheral devices, and the like). A more detailed description of an example computing system 100 is provided below in reference to FIG. 6.

The interconnect fabric 104 may include one or more HFI 110 that may include logic to implement the physical and link layers of the architecture, such that the node 102 may attach to the fabric 104 and exchange information (data) with other nodes, servers, or other devices. HFI 110 may include the appropriate hardware interfaces and drivers for operating system and VMM (virtual machine manager) support. The HFI 110 may also include specialized logic for executing communication protocols and other operations related to communications between node 102 and other systems, nodes, devices, or the like.

The HFI 110 may also include logic (e.g., link layer logic 120) to communicate with other systems, nodes, and the like. For example, the HFI 110, using link layer logic 120, may communicate with other HFIs and gateways associated with other nodes (e.g., node 116) and interconnected via the links and switches, such as via switch 112 and/or additional links and switches 114 that may be included in the fabric 104. As described above, the HFI 110 with link layer logic 120 may reside on the same die as the core (CPU) 106. In some embodiments, the HFI 110 with link layer logic 120 may reside on a different die than the core (CPU) 106, but within the same package.

As shown, switch 112 may also include link layer logic 122 that may be configured to communicate with other network components, such as node 116, e.g., via HFIs and gateways interconnected via additional links and switches 114. Techniques for synchronizing signals (e.g., data and/or control signals) passing through link layer logic 120 and 122 will be described below in greater detail.

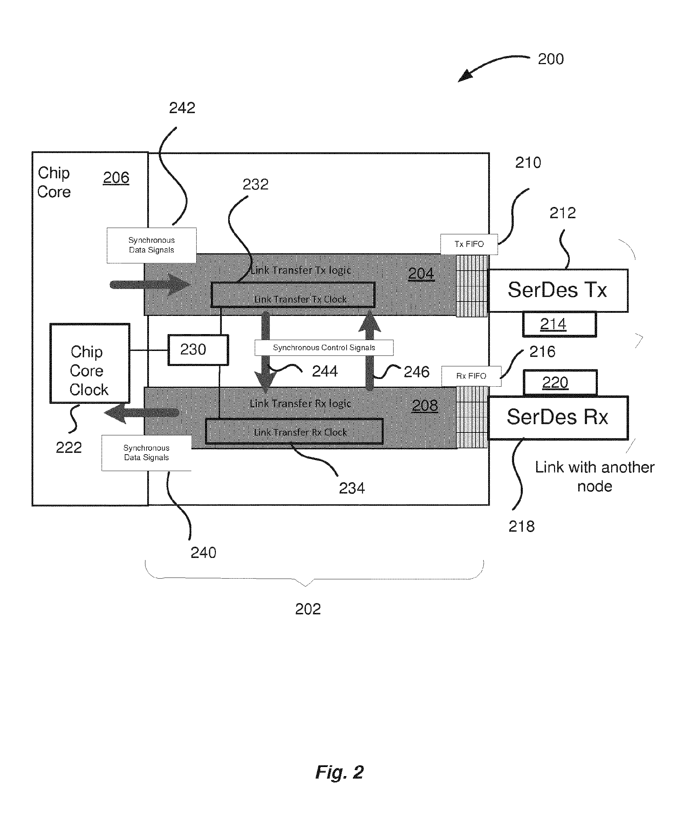

FIG. 2 is a schematic diagram of a link layer logic module 200 in accordance with some embodiments. The link layer logic module 200 may be similar to link layer logic 120 or 122 described in reference to FIG. 1. The link layer logic module 200 may include link transfer logic 202 to transfer data between a compute node associated with the link layer logic module 200, such as, for example, node 102 and another apparatus, such as node 116 described in reference to FIG. 1. The link transfer logic 202 may comprise a transmission (Tx) logic 204 to transmit data from a chip core 206 of the associated node to another node. The link transfer logic 202 may further comprise a reception (Rx) logic 208 to receive data for the core 206 from another apparatus.

The transmission logic 204 may comprise memory buffer 210 (e.g., a first in first out (FIFO) memory device) and a data converter, such as serializer (SerDes) 212 coupled with memory buffer 210. SerDes 212 may include SerDes clock generator generating a SerDes transmission (Tx) clock pulse wave (hereinafter "SerDes Tx clock 214") with an effective transmission rate (first frequency rate).

The reception logic 208 may comprise memory buffer 216 (e.g., another first in first out (FIFO) memory device) and a data converter interface, such as deserializer (SerDes) 218 coupled with memory buffer 216. SerDes 218 may include SerDes clock generator generating a SerDes reception (Rx) clock pulse wave (hereinafter "SerDes Rx clock 220") with an effective reception rate (second frequency rate). In some embodiments, the SerDes Tx clock 214 may be generated by the internal clock and data recovery (CDR) circuit associated with the link layer logic. For Rx side, the SerDes Tx clock 220 may be generated by a CDR circuit that may recover the clock data provided with the received data stream

The core 206 may include a core clock generator generating a core clock pulse wave (hereinafter "core clock 222") at a third frequency rate. In some embodiments, the first, second and third frequency rates may be different. For example, the third frequency rate of the core clock 222 may be higher than the first and second frequency rates of the SerDes Tx clock 214 and SerDes Rx clock 220. The first and second frequency rates may also be different. For example, the pulse wave associated with transmission of data by link layer logic module 200 may be generated at the node (e.g., node 102 of FIG. 1) associated with the link layer logic module 200, whereas the pulse wave associated with reception of data by link layer logic module 200 may be generated at another node (e.g., 116) that provides the data to be received by the link layer logic module 200. Accordingly, the first and second frequency rates may vary. In some instances the first and second frequencies may vary by a difference of some parts per million (ppm). In other instances, the first and second frequencies may vary significantly, e.g., by a factor of 2 or more.

In some embodiments, the link layer logic module 200 may include clock synchronization logic 230 associated with the link transfer logic 202, to compare the core clock 222 against the SerDes Tx clock 214 or SerDes Rx clock 220 and, based on results of the periodic comparisons, adjust the core clock 222 to generate a synchronized link transfer transmission (Tx) clock or a synchronized link transfer reception (Rx) clock respectively, to be used by the link transfer logic in the data transfer. The link transfer logic 202 may be configured to transfer, such as transmit or receive data between the core 206 of the associated node (e.g., 102) and another node according to the link transfer Tx clock or a link transfer Rx clock, respectively.

In other words, as a result of comparisons described above, the clock synchronization logic 230 may provide a link transfer Tx clock 232 with edges separated in time equal to the period of the core clock, and a link transfer Rx clock 234 with edges separated in time equal to the period of the core clock 222. Accordingly, data signals 240, 242 transmitted and received via the link layer logic module 200, and control signals 244, 246 that may pass between the transmission logic 204 and reception logic 208 (e.g., retransmission requests and the like) may be synchronized according to the synchronized link transfer Tx and Rx clocks.

More specifically, the transmission logic 204 may provide the outgoing data to memory buffer 210 according to the link transfer Tx clock 232and to transfer data out of memory buffer 210 into SerDes 212 according to SerDes Tx clock 214.

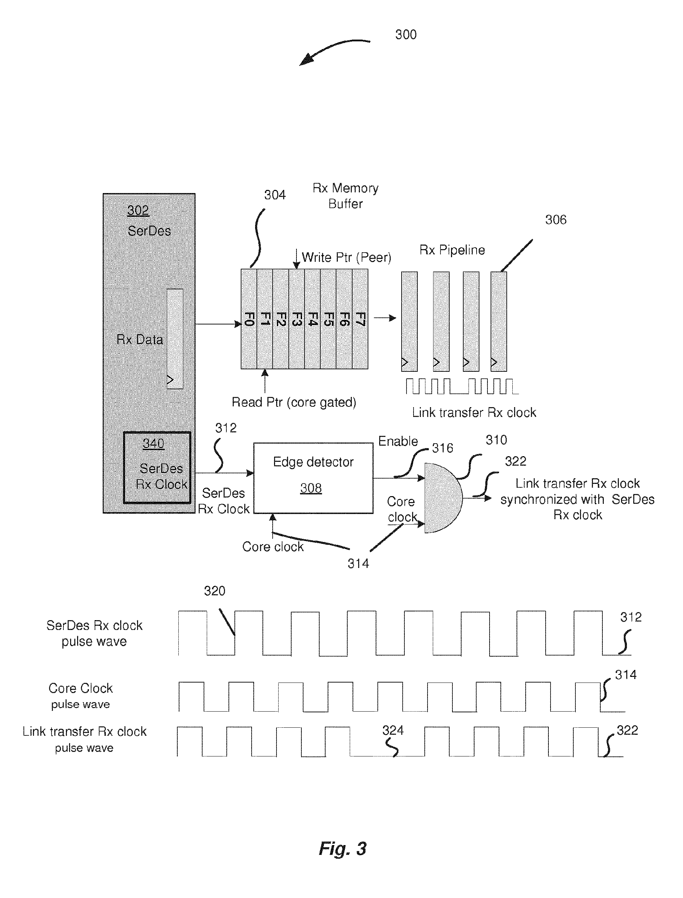

Conversely, the reception logic 208 may provide the incoming data from SerDes 218 to memory buffer 216 according to SerDes Rx clock 220 and to transfer the data out of memory buffer 216 according to the link transfer Rx clock 234. The synchronization techniques provided by the clock synchronization logic 230 are further described below in reference to FIGS. 3-4.

FIG. 3 is a schematic diagram illustrating clock synchronization logic 300 configured to provide signal synchronization for a link layer logic module, in accordance with some embodiments. For purposes of illustration, the clock synchronization techniques for the reception logic of the link transfer logic (reception side) will be described. It will be appreciated that the described techniques may be utilized for a transmission side of the link transfer logic module described in reference to FIG. 2. The described clock synchronization logic may be implemented as a hardware solution or a combination of hardware and software solutions.

As shown, a reception data converter interface of a reception logic (e.g., 208), such as deserializer (SerDes) 302, may receive and convert incoming data. The SerDes 302 may input (write) incoming data into a memory buffer device (e.g., FIFO) 304 at SerDes 302 clock frequency rate according to SerDes Rx clock 312. The data may be read out of the memory buffer device 304 into Rx pipeline 306 at a link transfer Rx frequency rate according to link transfer Rx clock 322, as described below.

The clock synchronization logic 300 may comprise a positive edge detector 308 that may be coupled with a gating device 310. As described in reference to FIG. 2, the SerDes 302 may include a SerDes Rx clock generator 340 configured to provide the SerDes Rx clock 312 that comprises a reception pulse wave at the second frequency rate. The SerDes Rx clock 312 may be provided for input to the positive edge detector 308. The core clock generator (not shown) may provide a core clock 314 having the third frequency rate for input in the positive edge detector 308 and the gating device 310.

The positive edge detector 308 may be configured to detect an edge (e.g., positive edge 320) in the SerDes Rx clock 312 and to output an enable signal 316 to the gating device 310 based on detection of the positive edge or provide no enable signal (e.g., cancel the enable signal 316) based on absence of the positive edge in the SerDes Rx clock 312. The gating device 310 may modify the core clock 314 based on the presence or absence of the enable signal 316, and to output the modified core clock that comprises a synchronized link transfer Rx clock 322 having the link transfer reception frequency rate.

Accordingly, the link transfer Rx clock 322 may align (synchronize) over a time period with the SerDes Rx clock 312 by missing a pulse 324 based on absence of the detection of the positive edge in the SerDes Rx clock 312.

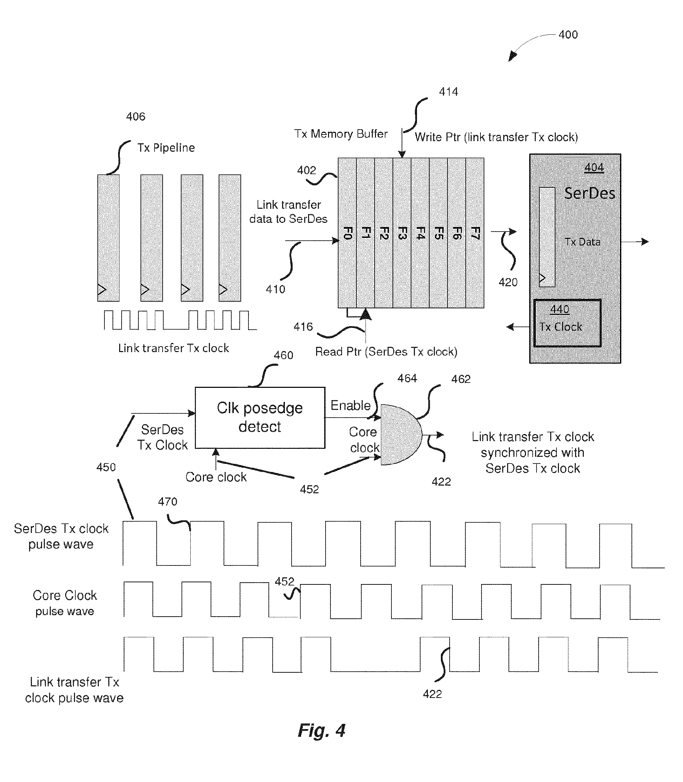

FIG. 4 is a schematic diagram illustrating signal synchronization for a transmission side of a link layer logic module 400, in accordance with some embodiments. The signal synchronization may be implemented in a manner similar to one discussed in reference to FIG. 3. More specifically, link transfer Tx clock 422 synchronized with a transmission pulse wave (e.g., SerDes Tx clock 450) may be generated in a similar manner, as described in reference to FIG. 4. The transmission logic of the link transfer logic discussed in reference to FIGS. 2-3 may comprise a Tx memory buffer 402 (e.g., FIFO device such as memory buffer 216) and a data converter such as serializer (SerDes) 404 coupled with the memory buffer 402. As described before, the SerDes 404 may have a SerDes Tx clock generator 440 that may be configured to provide a SerDes Tx clock 450 that comprises a transmission pulse wave at a first frequency rate. Data 410 to be transmitted by the link layer transfer logic may be provided (written, as shown by a write pointer 414) to the Tx memory buffer 402 according to the synchronized link transfer Tx clock 422 generated as described below. Data 420 comprising input data 410 may be transferred out of the Tx memory buffer 402 (e.g., read out, as shown by a read pointer 416) into the SerDes 404 at the first frequency rate according to SerDes clock 450.

The link transfer Tx clock 422 may be synchronized with the SerDes Tx clock 450 using the techniques described in reference to FIG. 3. For example, the clock synchronization logic may comprise a Tx gating device 460 and a Tx positive edge detector 462 coupled with the Tx gating device 460. The SerDes Tx clock generator 440 may provide the SerDes Tx clock 450 for input in the Tx positive edge detector 460, and the core clock generator (not shown) may provide the core clock 452 for input in the Tx positive edge detector 460 and the Tx gating device 462.

The Tx positive edge detector 460 may output an enable signal 464 to the Tx gating device 462 based on detection of a positive edge 470 in the SerDes Tx clock 450 or cancel the enable signal 464 based on absence of the positive edge 470 in the SerDes Tx clock 450. The Tx gating device 462 may modify the core clock 452 based on the presence or absence of the enable signal 464 and to output the modified core clock (e.g., synchronized link transfer Tx clock 422) synchronized with the first frequency rate of the SerDes Tx clock 452. Accordingly, modified core clock comprising the link transfer Tx clock 422 may be synchronized with the SerDes Tx clock 452 comprising transmission pulse wave as shown in FIG. 4.

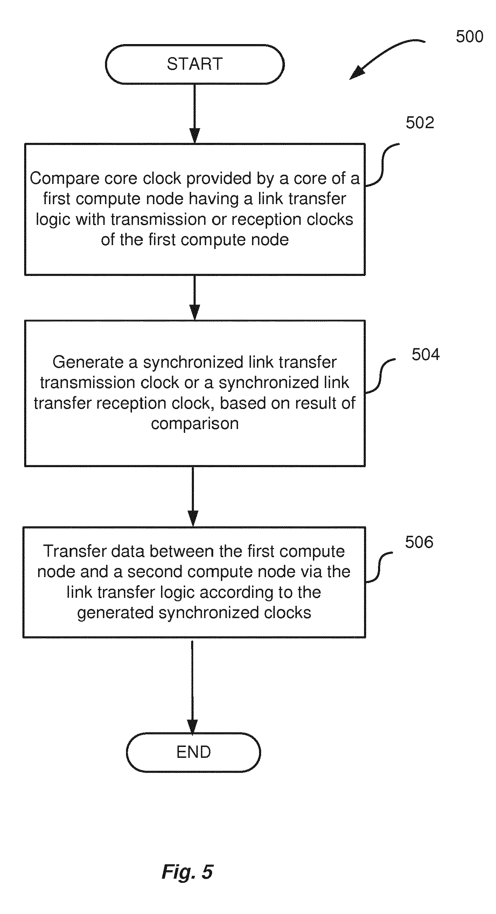

FIG. 5 is a process flow diagram for signal synchronization in a link layer logic module associated with a compute node, in accordance with some embodiments. The process 500 may comport with embodiments described in connection with FIGS. 1-4. The process 500 may be performed by link transfer logic described in reference to FIGS. 1-4.

At block 502, the process 500 may include comparing clock pulse waves (clocks) provided respectively by transmission or reception clock generators associated with link transfer logic against a core clock provided by a core of a first compute node having the link transfer logic.

At block 504, the process 500 may include modifying core clock based on results of the comparison, to generate a synchronized link transfer transmission clock or a synchronized link transfer reception clock, respectively.

At block 506, the process 500 may include transferring data between the first compute node and a second compute node via the link transfer logic according to the generated synchronized clocks, as described in reference to FIGS. 3-4.

FIG. 6 schematically illustrates an example computing device 600 suitable for having various components of FIGS. 1-5, such as computing system 100 including compute node 102 and interconnect fabric 104, in accordance with some embodiments. As shown, computing device 600 may include one or more processors or processor cores 602 and system memory 604. As indicated above, for the purpose of this application, including the claims, the terms "processor" and "processor cores" may be considered synonymous, unless the context clearly requires otherwise. The processor 602 may include any type of processors, such as a central processing unit (CPU), a microprocessor, and the like. The processor 602 may be implemented as an integrated circuit having multi-cores, e.g., a multi-core microprocessor. The computing device 600 may include mass storage devices 606 (such as diskette, hard drive, volatile memory (e.g., dynamic random-access memory (DRAM), compact disc read-only memory (CD-ROM), digital versatile disk (DVD), and so forth). In general, system memory 604 and/or mass storage devices 606 may be temporal and/or persistent storage of any type, including, but not limited to, volatile and non-volatile memory, optical, magnetic, and/or solid state mass storage, and so forth. Volatile memory may include, but is not limited to, static and/or dynamic random access memory. Non-volatile memory may include, but is not limited to, electrically erasable programmable read-only memory, phase change memory, resistive memory, and so forth.

The computing device 600 may further include input/output devices 608 (such as a display (e.g., a touchscreen display), keyboard, cursor control, remote control, gaming controller, image capture device, and so forth) and communication interfaces 610 (such as network interface cards, modems, infrared receivers, radio receivers (e.g., Bluetooth), and so forth).

The communication interfaces 610 may include communication chips (not shown) that may be configured to operate the device 600 in accordance with a Global System for Mobile Communication (GSM), General Packet Radio Service (GPRS), Universal Mobile Telecommunications System (UMTS), High Speed Packet Access (HSPA), Evolved HSPA (E-HSPA), or Long-Term Evolution (LTE) network. The communication chips may also be configured to operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chips may be configured to operate in accordance with Code Division Multiple Access (CDMA), Time Division Multiple Access (TDMA), Digital Enhanced Cordless Telecommunications (DECT), Evolution-Data Optimized (EV-DO), derivatives thereof, as well as any other wireless protocols that are designated as 3G, 4G, 5G, and beyond. The communication interfaces 610 may operate in accordance with other wireless protocols in other embodiments.

The above-described computing device 600 elements may be coupled to each other via system bus 612, which may represent one or more buses. In the case of multiple buses, they may be bridged by one or more bus bridges (not shown). Each of these elements may perform its conventional functions known in the art. In particular, system memory 604 and mass storage devices 606 may be employed to store logic implementing an operating system and/or applications for the operation of the computing device 600, collectively referred to as computational logic 622. The various elements may be implemented by assembler instructions supported by processor(s) 602 or high-level languages that may be compiled into such instructions.

In some embodiments, as shown, at least some of the elements of the computing device 600 (e.g., communication interfaces 610) may comprise some of the components of the interconnect fabric 104. These components of the interconnect fabric 104 may include link layer logic 120 (122) configured to synchronize signals as described in reference to FIGS. 2-5.

The permanent copy of the programming instructions of computational logic 622 may be placed into mass storage devices 606 in the factory or in the field through for example, a distribution medium (not shown), such as a compact disc (CD), or through communication interface 610 (from a distribution server (not shown)). That is, one or more distribution media having an implementation of the agent program may be employed to distribute the agent and to program various computing devices.

The number, capability, and/or capacity of the elements 608, 610, 612 may vary for different embodiments, depending on the functions and performance to be provided by computing device 600, e.g., whether computing device 600 is a single server, a collection of servers and the like. Their constitutions are otherwise known, and accordingly will not be further described.

In embodiments, at least one of processors 602 may be packaged together with memory 604 having computational logic 622, and configured to form a System in Package (SiP) or a System on Chip (SoC).

According to various embodiments, the present disclosure describes a number of examples. Example 1 is an apparatus for link layer signal synchronization, comprising: a clock synchronization logic, to: compare a core clock of the apparatus having a core clock frequency against a transmission clock of the apparatus having a first frequency or a reception clock of the apparatus having a second frequency; and based on results of the comparison, generate a synchronized link transfer transmission clock or a synchronized link transfer reception clock respectively.

Example 2 may include the subject matter of Example 1, and further specifies that the core clock frequency is different than the first and second frequencies.

Example 3 may include the subject matter of Example 1, and further specifies that the apparatus further comprises link transfer logic, wherein the clock synchronization logic is associated with the link transfer logic, wherein the link transfer logic comprises a transmission logic to transmit first data from the apparatus to another apparatus and a reception logic to receive second data for the apparatus from the other apparatus, wherein the synchronized link transfer transmission clock and synchronized link transfer reception clock are to be used by the link transfer logic in the first data transmission and the second data reception respectively.

Example 4 may include the subject matter of Example 3, and further specifies that the transmission logic comprises a memory buffer and a serializer (SerDes) coupled with the memory buffer, wherein the memory buffer comprises a first in first out (FIFO) memory device.

Example 5 may include the subject matter of Example 4, and further specifies that the transmission clock comprises a SerDes clock having the first frequency, wherein the transmission logic is to provide the first data to the memory buffer according to the synchronized link transfer transmission clock pulse wave and to transfer the first data out of the memory buffer into the SerDes according to the transmission clock.

Example 6 may include the subject matter of Example 3, and further specifies that the reception logic comprises a memory buffer and a deserializer (SerDes) coupled with the memory buffer.

Example 7 may include the subject matter of Example 6, and further specifies that wherein the reception clock comprises a SerDes clock having the second frequency, wherein the reception logic to provide the second data from the SerDes to the memory buffer according to the reception clock and to transfer the second data out of the memory buffer according to the synchronized link transfer reception clock.

Example 8 may include the subject matter of Example 7, and further specifies that the memory buffer comprises a first in first out (FIFO) memory device.

Example 9 may include the subject matter of Example 1, and further specifies that the clock synchronization logic further comprises a gating device and a positive edge detector coupled with the gating device, wherein clock synchronization logic is to provide the transmission clock for input in the first positive edge detector, and the core clock for input in the positive edge detector and the gating device.

Example 10 may include the subject matter of Example 9, and further specifies that the positive edge detector is to output an enable signal to the gating device based on detection of a positive edge in the transmission clock or cancel the enable signal based on absence of the positive edge.

Example 11 may include the subject matter of Example 10, and further specifies that the gating device is to modify the core clock based on presence or absence of the enable signal and to output the modified core clock to provide the synchronized link transfer transmission clock.

Example 12 may include the subject matter of Example 1, and further specifies that the clock synchronization logic further comprises a gating device and a positive edge detector coupled with the gating device, wherein the clock synchronization logic is to provide the reception clock for input in the positive edge detector, and the core clock for input in the positive edge detector and the gating device.

Example 13 may include the subject matter of Example 12, and further specifies that the positive edge detector is to output an enable signal to the gating device based on detection of a positive edge in the reception clock or cancel the enable signal based on absence of the positive edge.

Example 14 may include the subject matter of Example 13, and further specifies that the gating device is to modify the core clock based on the presence or absence of the enable signal, and to output the modified core clock to provide the synchronized link transfer reception clock.

Example 15 may include the subject matter of Examples 1 to 14, and further specifies that the apparatus comprises a switch of a link layer of an interconnect fabric of a computer system.

Example 16 may include the subject matter of Example 1, and further specifies that the apparatus comprises a host fabric interface (HFI) device of an interconnect fabric of a computer system.

Example 17 may include the subject matter of Example 16, and further specifies that the HFI device co-resides on a same die with a central processing unit (CPU) of the computer system.

Example 18 may include the subject matter of Example 16, and further specifies that the HFI device resides on a different die than a central processing unit (CPU) of the computer system, and within a same package with the CPU of the computer system.

Example 19 is a method for link layer signal synchronization, comprising: comparing a transmission clock and reception clock associated with a link transfer logic against a core clock provided by a core of a first compute node having the link transfer logic; based on a result of the comparison, generating a link transfer transmission clock or a link transfer reception clock respectively; ; and transferring data between the first compute node and a second compute node via the link transfer logic according to the link transfer transmission or reception clocks.

Example 20 may include the subject matter of Example 19, and further specifies that transferring data between the first and second compute nodes via the link transfer logic includes transmitting first data from the first compute node to the second compute node according to the link transfer transmission clock via a transmission logic of the link transfer logic and receiving second data from the second compute node via a reception logic of the link transfer logic of the first compute node according to the link transfer reception clock.

Example 21 is an apparatus for link layer signal synchronization, comprising: a core; and a link layer coupled with the core, comprising: link transfer logic to exchange data between the apparatus and another apparatus, the link transfer logic to provide a transmission clock having a first frequency and a reception clock having a second frequency; and a clock synchronization logic associated with the link transfer logic, to: compare a core clock having a core clock frequency of the apparatus against the transmission or reception clocks; and based on results of the comparison, generate a synchronized link transfer transmission clock or a synchronized link transfer reception clock respectively, to be used by the link transfer logic.

Example 22 may include the subject matter of Example 21, and further specifies that the link transfer logic to transfer data comprises a transmission logic to transmit first data from the apparatus to the other apparatus and a reception logic to receive second data for the apparatus from the other apparatus.

Example 23 may include the subject matter of Example 22, and further specifies that the transmission logic comprises a memory buffer and a serializer (SerDes) coupled with the memory buffer, wherein the transmission clock comprises a SerDes clock having the first frequency, wherein the transmission logic is to provide the first data to the memory buffer according to the link transfer transmission clock and to transfer the first data out of the first memory buffer into the SerDes according to SerDes clock.

Example 24 may include the subject matter of Example 22, and further specifies that the reception module comprises a memory buffer and a serializer-deserializer (SerDes) coupled with the memory buffer, wherein the reception clock comprises a SerDes clock having the second frequency , wherein the reception logic is to provide the second data from the SerDes to the memory according to the SerDes clock and to transfer the second data out of the memory buffer according to the synchronized link transfer reception clock.

Example 25 may include the subject matter of Example 21, and further specifies that the apparatus is a compute node.

Various embodiments may include any suitable combination of the above-described embodiments including alternative (or) embodiments of embodiments that are described in conjunctive form (and) above (e.g., the "and" may be "and/or"). Furthermore, some embodiments may include one or more articles of manufacture (e.g., non-transitory computer-readable media) having instructions, stored thereon, that when executed result in actions of any of the above-described embodiments. Moreover, some embodiments may include apparatuses or systems having any suitable means for carrying out the various operations of the above-described embodiments.

The above description of illustrated implementations, including what is described in the Abstract, is not intended to be exhaustive or to limit the embodiments of the present disclosure to the precise forms disclosed. While specific implementations and examples are described herein for illustrative purposes, various equivalent modifications are possible within the scope of the present disclosure, as those skilled in the relevant art will recognize.

These modifications may be made to embodiments of the present disclosure in light of the above detailed description. The terms used in the following claims should not be construed to limit various embodiments of the present disclosure to the specific implementations disclosed in the specification and the claims. Rather, the scope is to be determined entirely by the following claims, which are to be construed in accordance with established doctrines of claim interpretation.

## Claims

1. An apparatus for link layer signal synchronization, comprising:
a clock synchronization logic, to:
compare a core clock of the apparatus having a core clock frequency against a transmission clock of the apparatus having a first frequency or a reception clock of the apparatus having a second frequency; and
based on results of the comparison, generate a synchronized link transfer transmission clock or a synchronized link transfer reception clock respectively.

2. The apparatus of claim 1, wherein the core clock frequency is different than the first and second frequencies.

3. The apparatus of claim 1, wherein the apparatus further comprises link transfer logic, wherein the clock synchronization logic is associated with the link transfer logic, wherein the link transfer logic comprises a transmission logic to transmit first data from the apparatus to another apparatus and a reception logic to receive second data for the apparatus from the other apparatus, wherein the synchronized link transfer transmission clock and synchronized link transfer reception clock are to be used by the link transfer logic in the first data transmission and the second data reception respectively wherein the transmission logic comprises a memory buffer and a serializer (SerDes) coupled with the memory buffer, wherein the memory buffer comprises a first in first out (FIFO) memory device, wherein the transmission clock comprises a SerDes clock having the first frequency, wherein the transmission logicis to provide the first data to the memory buffer according to the synchronized link transfer transmission clock and to transfer the first data out of the memory buffer into the SerDes according to the transmission clock...

4. The apparatus of claim 3, wherein the reception logic comprises a memory buffer and a deserializer (SerDes) coupled with the memory buffer, wherein the reception clock comprises a SerDes clock having the second frequency, wherein the reception logic to provide the second data from the SerDes to the memory buffer according to the reception clock and to transfer the second data out of the memory buffer according to the synchronized link transfer reception clock, wherein the memory buffer comprises a first in first out (FIFO) memory device.

5. The apparatus of claim 1, wherein the clock synchronization logic further comprises a gating device and a positive edge detector coupled with the gating device, wherein the clock synchronization logic is to provide the transmission clock for input in the first positive edge detector, and the core clock for input in the positive edge detector and the gating device.

6. The apparatus of claim 5, wherein the positive edge detector is to output an enable signal to the gating device based on detection of a positive edge in the transmission clock or cancel the enable signal based on absence of the positive edge, wherein the gating device is to modify the core clock based on presence or absence of the enable signal and to output the modified core clock to provide the synchronized link transfer transmission clock..

7. The apparatus of claim 1, wherein the clock synchronization logic further comprises a gating device and a positive edge detector coupled with the gating device, wherein the clock synchronization logic is to provide the reception clock for input in the positive edge detector, and the core clock for input in the positive edge detector and the gating device, wherein the positive edge detector is to output an enable signal to the gating device based on detection of a positive edge in the reception clock or cancel the enable signal based on absence of the positive edge, wherein the gating device is to modify the core clock based on the presence or absence of the enable signal, and to output the modified core clock to provide the synchronized link transfer reception clock.

8. The apparatus of any of claims 1 to 14, wherein the apparatus comprises a switch of a link layer of an interconnect fabric of a computer system.

9. The apparatus of claim 1, wherein the apparatus comprises a host fabric interface (HFI) device of an interconnect fabric of a computer system.

10. The apparatus of claim 9, wherein the HFI device co-resides on a same die with a central processing unit (CPU) of the computer system.

11. The apparatus of claim 9, wherein the HFI device resides on a different die than a central processing unit (CPU) of the computer system, and within a same package with the CPU of the computer system.

12. A method for link layer signal synchronization, comprising:
comparing a transmission clock and reception clock associated with a link transfer logic against a core clock provided by a core of a first compute node having the link transfer logic;
based on a result of the comparison, generating a link transfer transmission clock or a link transfer reception clock respectively; and
transferring data between the first compute node and a second compute node via the link transfer logic according to the link transfer transmission or reception clocks.

13. The method of claim 12, wherein transferring data between the first and second compute nodes via the link transfer logic includes transmitting first data from the first compute node to the second compute node according to the link transfer transmission clock via a transmission logic of the link transfer logic and receiving second data from the second compute node via a reception logic of the link transfer logic of the first compute node according to the link transfer reception clock.

14. An apparatus for link layer signal synchronization, comprising:
a core; and
a link layer coupled with the core, comprising:
link transfer logic to exchange data between the apparatus and another apparatus, the link transfer logic to provide a transmission clock having a first frequency and a reception clock having a second frequency; and
a clock synchronization logic associated with the link transfer logic, to:
compare a core clock having a core clock frequency of the apparatus against the transmission or reception clocks; and based on results of the comparison, generate a synchronized link transfer transmission clock or a synchronized link transfer reception clock respectively, to be used by the link transfer logic.

15. The apparatus of claim 14, wherein the link transfer logic to transfer data comprises a transmission logic to transmit first data from the apparatus to the other apparatus and a reception logic to receive second data for the apparatus from the other apparatus, wherein the transmission logic comprises a memory buffer and a serializer (SerDes) coupled with the memory buffer, wherein the transmission clock comprises a SerDes clock having the first frequency, wherein the transmission logic is to provide the first data to the memory buffer according to the synchronized link transfer transmission clock and to transfer the first data out of the first memory buffer into the SerDes according to the SerDes clock, wherein the reception logic comprises a memory buffer and a serializer-deserializer (SerDes) coupled with the memory buffer, wherein the reception clock comprises a SerDes clock having the second frequency, wherein the reception logic is to provide the second data from the SerDes to the memory according to the SerDes clock and to transfer the second data out of the memory buffer according to the synchronized link transfer reception clock.
